# EUROPÄISCHE PATENTANMELDUNG

(11) **EP 1 527 670 A2**
(43) Veröffentlichungstag der Anmeldung: **04.05.2005**
(21) Anmeldenummer: 04024490.7
(22) Anmeldetag: 14.10.2004
(51) Int. Cl.: A01D 34/86

(54) **Verfahren zum Betreiben einer einem Fahrzeug zugeordneten Mäheinrichtung**

(30) Priorität: 03.11.2003 DE 10351537
(71) Anmelder: Wiedmann, Joachim, 88662 Überlingen (DE)
(72) Erfinder: Wiedmann, Joachim, 88662 Überlingen (DE)
(74) Vertreter: Weiss, Peter, Dr. rer. nat.

(57) **Zusammenfassung**

Bei einem Verfahren zum Betreiben einer einem Fahrzeug (1) zugeordneten Einrichtung (R), wobei ein dem Fahrzeug (1) zugeordneter Tragarm (5, 6) mit anschliessender Bearbeitungseinrichtung (7) lageveränderbar nahe eines Untergrundes (4) bewegt wird, soll zum Bearbeiten eines Untergrundes, insbesondere zum Ummähen bzw. Freimähen eines Hindernisses (9) während der Fahrt des Fahrzeuges (1) die Bearbeitungseinrichtung (7) in einem ersten Verfahrensschritt hinter das Hindernis (9) einfahren, dann wieder zurückgefahren werden und anschliessend im Bereich zwischen Hindernis (9) und Fahrzeug (1) das Hindernis (9) während dem Vorbeifahren dieses umfahren und zumindest teilweise nach dem Vorbeifahren dieses nachbearbeitet.

## Beschreibung

Die vorliegende Erfindung betrifft ein Verfahren zum Betreiben einer einem Fahrzeug zugeordneten Einrichtung, wobei ein dem Fahrzeug zugeordneter Tragarm mit anschliessender Bearbeitungseinrichtung lageveränderbar nahe eines Untergrundes bewegt wird.

Derartige Verfahren, sowie Einrichtungen zum Durchführen des Verfahrens sind in vielfältiger Form und Ausführung im Markt bekannt und gebräuchlich. Mit derartigen Einrichtungen werden bspw. Seitenstreifen, neben einer Strasse gemäht, wobei meistens an entsprechenden Fahrzeugen diese als Einrichtungen angeordnet sind. In den Bereichen der Randstreifen bzw. Seitenstreifen, neben der Strasse sind eine Vielzahl von Hindernisse, wie Bäume, Kulturen, Obstplantagen, Pflanzen, Sonderkulturen, wie Weinbau, Absperrpoller, Pfosten, Begrenzungspfosten, Leitplanken, Verkehrsschilder etc., vorgesehen, die ummäht werden müssen.

Zumeist sind derartige Seiten- oder Randstreifen begrünt und müssen permanent gemäht werden. Insbesondere im Bereich der Hindernisse können diese Hindernisse nicht automatisch vom Fahrzeug aus mit einer Einrichtung vollständig ummäht werden. Lediglich ist ein Teilummähen mittels herkömmlichen Einrichtungen, die Fahrzeugen zugeordnet sind, möglich. Das vollständige Ummähen bzw. Freimähen eines Hindernisses ist bisher nur erschwert möglich, in dem das Fahrzeug bspw. anhalten muss um mit der Einrichtung aufwendig hinter dem Hindernis zu mähen, wobei zumeist von Hand und manuell ein verbleibender Streifen oder Rest hinter dem Hindernis nachgemäht werden muss, was unerwünscht ist.

Der vorliegenden Erfindung liegt daher die Aufgabe zugrunde, ein Verfahren sowie eine Einrichtung zum Durchführen des Verfahrens der eingangs genannten Art zu schaffen, mit welchen auf einfache und kostengünstige Weise ein Freimähen und Ummähen von Hindernissen vollständig möglich ist, wobei ein Fahrzeug permanent in einer Arbeitsrichtung verfahren werden kann. Ferner sollen höhere Arbeitgeschwindigkeiten des Fahrzeuges möglich sein. Zudem soll ein Abweichen des Fahrzeuges vom Hindernis durch die Einrichtung ausgeglichen werden können.

Zur Lösung dieser Aufgabe führen die Merkmale der Kennzeichen des Patentanspruches 1 sowie die der nebengeordneten Patentansprüche.

Bei der vorliegenden Erfindung hat sich als besonders vorteilhaft erwiesen, eine Einrichtung zum Bearbeiten eines Untergrundes einem Fahrzeug, insbesondere einer Halteeinrichtung zuzuordnen und in einem Vorhaltewinkel von etwa 30° bis 60°, insbesondere 45° ein Hindernis in einem ersten Arbeitsschritt zu hintermähen. Das heisst, das Bearbeitungseinrichtung befindet sich relativ vom Fahrzeug aus betrachtet, hinter dem Hindernis. Während des Vorbeifahrens des Fahrzeuges am Hindernis, wird der zumindest eine Tragarm entgegen der Fahrtrichtung des Fahrzeuges verschwenkt, so dass das Bearbeitungseinrichtung von hinten um das Hindernis herumgeführt wird.

Beim Vorbeifahren fährt das Bearbeitungseinrichtung bzw. der zumindest eine Tragarm hinter das Hindernis, und ummäht auf diese Weise vollständig den Bereich des Hindernisses.

Dann wird zumindest ein Tragarm wieder in einem Vorhaltewinkel bezogen auf die Fahrzeugachse in Fahrtrichtung verfahren, um das nächstes nachfolgende Hindernis in oben beschriebener Weise erneut zu ummähen.

Wichtig ist jedoch bei der vorliegenden Erfindung, dass über Abstandmesseinrichtungen, die Sensorelemente, Infrarotsensoren, Radarsensoren, Ultraschallsensoren od. dgl. enthalten können, der betragsmässige Abstand und die Winkel vom Fahrzeug zum Hindernis gemessen und ermittelt wird, um das Bearbeitungseinrichtung bzw. die Einrichtung anzusteuern bzw. entsprechend für das Ummähen bzw. Freizumähen des Hindernisses zu verfahren. Die Abstandsmesseinrichtung ist vorzugsweise in einem wählbaren Winkel zum Fahrzeug ausgerichtet und definiert einen detektierbaren Bereich für Hindernisse.

Dabei besteht die Einrichtung aus einer Mehrzahl von Tragarmen, die um eine Achse A, B und C die vorzugsweise lotrecht zum Fahrzeug angeordnet sind, verschwenkbar ist, wobei am letzten Tragarm endseitig um eine Achse D eine Bearbeitungseinrichtung verschwenkbar anschliesst.

Als Betätigungseinrichtung können Kreiselmähwerke, Kreiseleggen, rotierende Zinken zur Bearbeitung von Untergründen verwendet werden.

Zusätzlich soll ebenfalls im Rahmen der vorliegenden Erfindung liegen, dass als Bearbeitungseinrichtung auch Einrichtungen zum Ausbringen von Unkrautbekämpfungsmitteln, Schädlingsbekämpfungsmittel, Herbiziden, Fungiziden an den letzten Tragarm anschliessen oder zusätzlich zu einer Bearbeitungseinrichtung angeordnet sind, bspw. Dünger oder Schädlingsbekämpfungsmittel etc. ggf. auch während dem Mähvorgang auszubringen.

Dies soll ebenfalls im Rahmen der vorliegenden Erfindung liegen.

Im Rahmen der vorliegenden Erfindung soll liegen, dass die Tragarme über Servoantriebe, Seilzugelemente, Hydraulikzylinder, Pneumatikzylinder od. dgl. um die Achsen A, B, C und D verschwenkt werden können. Die entsprechende Steuerung erfolgt in Abhängigkeit der Abstandsmesseinrichtung in oben beschriebener Weise. Die Einrichtung, insbesondere dessen Bearbeitungseinrichtung kann als Fadenbearbeitungseinrichtung, aber auch Kreiselegge oder Spritzeinrichtung zum Ausbringen von Dünger oder Schädlingsbekämpfungsmitteln od. dgl. ausgebildet sein.

Um die jeweilige Position der Tragarme zueinander zu bestimmen kann ein Winkelmesssystem oder Wegmesssystem vorgesehen sein, welches die entsprechenden Winkel der Tragarme zueinander exakt ermittelt. Auf diese Weise lässt sich auch ein Abstand des Bearbeitungseinrichtung es zum Fahrzeug sowie auch ein Vorhaltwinkel zum Fahrzeug der einzelnen Tragarme jederzeit exakt bestimmen, ermitteln bzw. für das Ummähen des Hindernisses bestimmen und ansteuern. Auf diese Weise lässt sich während der Fahrt jedes beliebige Hindernis vollständig freimähen bzw. ummähen, ohne dass das Hindernis beschädigt oder berührt wird, auch wenn das Fahrzeug von der Fahrbahn oder vom Seitenstreifen bzw. vom Hindernis leicht abweicht. Eine Distanzmessung und Ortsvektorenmessung zum Hindernis kann auch Abweichungen während der Fahrt ausgleichen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellt Draufsicht auf eine erfindungsgemässe Einrichtung zum Freimähen bzw. Ummähen eines Hindernisses;
Figur 2 eine schematisch dargestellte Draufsicht auf die dem Fahrzeug zugeordnete Einrichtung gemäss Figur 1 in einer weiteren Gebrauchslage;
Figur 3 eine schematisch dargestellte Draufsicht auf die Einrichtung gemäss Figuren 1 und 2 in einer noch weiteren Gebrauchslage;
Figur 4 eine schematisch dargestellte perspektivische Seitenansicht der dem Fahrzeug zugeordneten Einrichtung;
Figur 5 eine schematisch dargestellte Rückansicht des Fahrzeuges mit ausgefahrener Einrichtung.

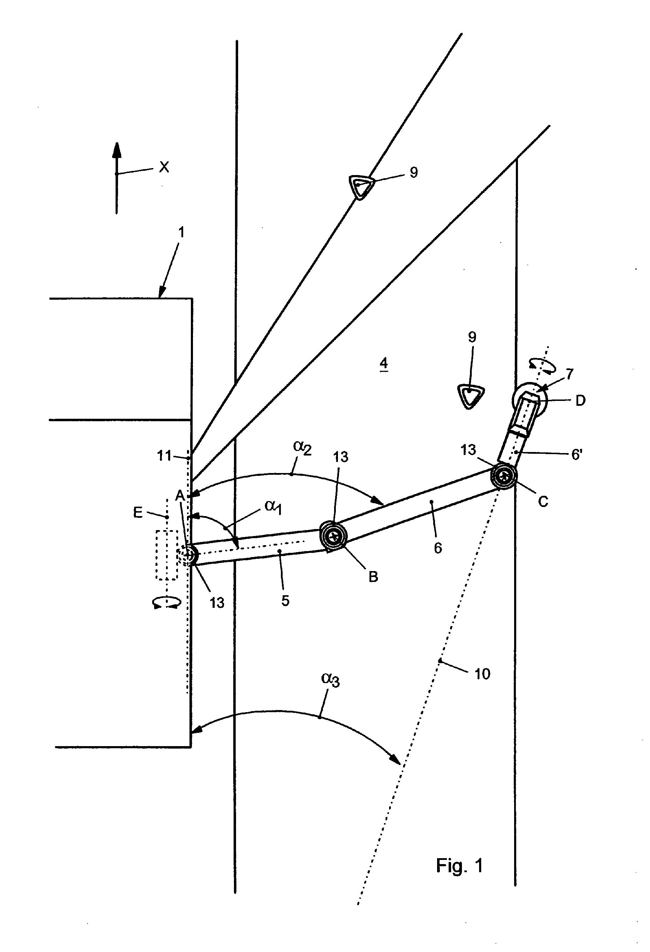

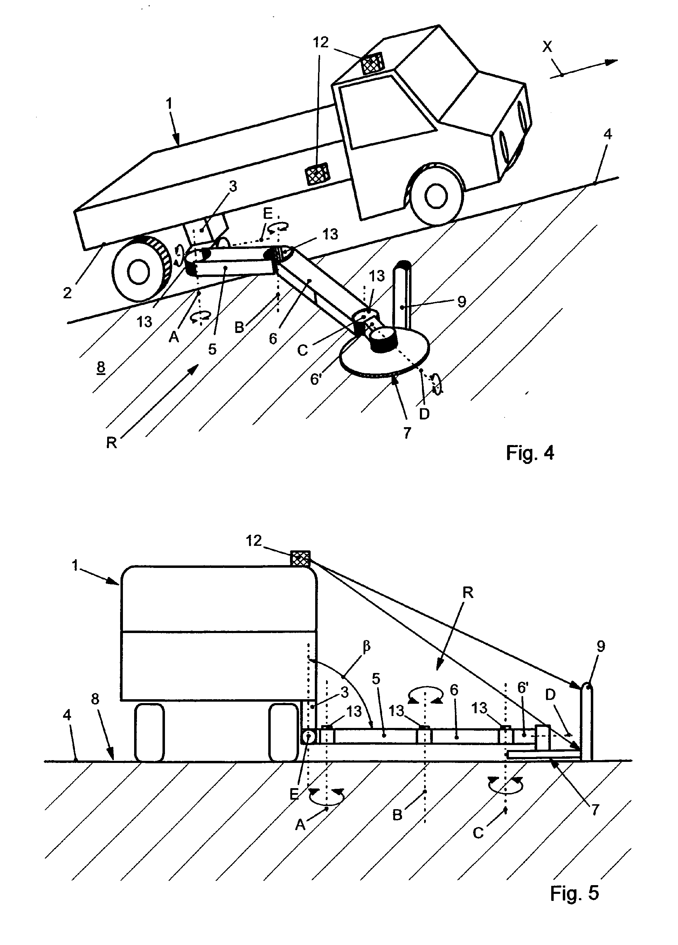

Gemäss Figur 1 ist eine erfindungsgemässe Einrichtung R einem Fahrzeug 1 zugeordnet, wobei eine Karosserie 2 des Fahrzeuges 1 eine Halteeinrichtung 3 aufweist, die vorzugsweise lotrecht nach unten zu einem Untergrund 4 hin abragt, wie es auch in dem Ausführungsbeispiel gemäss Figur 4 dargestellt ist.

An die Halteeinrichtung 3, vorzugsweise nahe des Untergrundes 4, schliesst die eigentliche Einrichtung R an. Die Einrichtung R besteht im vorliegenden Ausführungsbeispiel gemäss Figur 1 vorzugsweise aus einem ersten gegenüber der Halteeinrichtung 3 um eine Achse A bewegbaren Tragarm 5 und einem um eine Achse B, die vorzugsweise lotrecht zum Untergrund 4 ausgerichtet ist, daran verschwenkbar angeordneten zweiten Tragarm 6, schliesst um eine ebenfalls lotrechte Achse C ein weiterer Tragarm 6' an.

Die Tragarme 5, 6, 6' sind über jeweils Servomotoren 13 aktiv antreibbar.

Endseits an den Tragarm 6' schliesst diesem um eine Achse D verschwenkbar, insbesondere aktiv verschwenkbar eine Bearbeitungseinrichtung 7 an. Die Achse D liegt in der Mitte des Tragarmes 6'.

Der Tragarm 5 mit daran anschliessendem Tragarm 6 und 6' sowie Bearbeitungseinrichtung 7 ist um die jeweils parallelen Achsen A, B, C um einen Vorhaltewinkel α₁, α₂, α₃ aktiv verschwenkbar bzw. antreibbar der Halteeinrichtung 3 zugeordnet. Entsprechend hier nicht dargestellte Hydraulikzylinder, Antriebselemente, Servoantriebe 13 od. dgl. können den Tragarm 5 mit anschliessendem Tragarm 6, 6' und Bearbeitungseinrichtung 7 um die Achse A, B, C hin- und herbewegen bzw. verfahren.

Gleichzeitig ist über hier nicht näher dargestellte Antriebselement, Seilzüge, Servoantriebe 13 od. dgl. der Tragarm 5 mit anschliessender Bearbeitungseinrichtung 7 um die Achse E, die vorzugsweise parallel zur Fahrzeugachse 11 ausgerichtet ist, gegenüber dem Tragarm 5 verschwenkbar bzw. die Tragarme 5, 6, 6' lassen sich um die Achse E horizontal aktiv angetrieben oder passiv, beispielsweise federentlastet verschwenken.

Auf diese Weise lässt sich die Einrichtung R, insbesondere der Tragarm 5 und anschliessenden Tragarm 6, 6' und Bearbeitungseinrichtung 7 seitlich nach oben, wie es in Figur 5 angedeutet ist, verschwenken, so dass die Bearbeitungseinrichtung in eingefahrener Lage und Position an das Fahrzeug seitlich herangeklappt oder unter dieses durch aneinanderklappen der einzelnen Tragarme 5, 6, 6' eingeschwenkt werden kann. Beide Möglichkeiten sollen hier vom vorliegenden Erfindungsgedanken mit umfasst sein.

Ferner gewährleistet die Verschwenkbarkeit des Tragarmes 5 um die Achse E, dass auch bspw. bei abschüssigen Abhängen der Tragarm 5 mit anschliessendem Tragarm 6, 6' und Bearbeitungseinrichtung 7 leicht nach unten, d. h., um einen Winkel β kleiner, gleich oder grösser als 90° einzustellen ist, so dass auch leichte Steigungen, Hänge, Böschungen oder auch Abhänge mit der Einrichtung R bearbeitet werden können. Dies soll ebenfalls im Rahmen der vorliegenden Erfindung liegen.

In dem Ausführungsbeispiel der vorliegenden Erfindung gemäss Figur 1 fährt das Fahrzeug 1 in dargestellter Pfeilrichtung X auf einer Strasse, nahe eines Rand- oder Seitenstreifens 8, in welchem eine Mehrzahl von Hindernissen 9, seitlich einer Fahrbahn angeordnet sind. Hindernis 9 können Fahrbahnmarkierungen, Beschilderungen, Bäume, Leitplanken, Sonderkulturen, Obstplantagen, Absperrpoller od. dgl. sein. Da diese zumeist in begrünten Randstreifen 8 angeordnet sind, welche gemäht werden müssen, ist es erforderlich entsprechende Hindernisse 9 zu ummähen bzw. freizumähen.

Hierzu hat sich bei der vorliegenden Erfindung als besonders vorteilhaft erwiesen, in einem ersten Verfahrensschritt während des Fahrens des Fahrzeuges 1 in Pfeilrichtung X die Einrichtung R, insbesondere die Tragarme 5, 6, 6' in einem Vorhaltewinkel α₁, α₂, α₃ zwischen einer Tragarmachse 10 und Fahrzeugachse 11, um die Achse A, B, C zu verschwenken, so dass ein Vorhaltewinkel α₃ von etwa 30° bis 60°, vorzugsweise 45° eingestellt ist. Gleichzeitig wird über eine Abstandsmesseinrichtung 12 eine Richtung sowie ein Abstand zum Hindernis 9 während der Fahrt des Fahrzeuges errechnet und bestimmt, so dass sich auf diese Weise während der Fahrt und auch bei ggf. sich ändernder Geschwindigkeit des Fahrzeuges 1 die Ortskoordinate zwischen Fahrzeug 1 und Hindernis 9 bzw. von Bearbeitungseinrichtung 7 und Hindernis 9 exakt errechnen lässt.

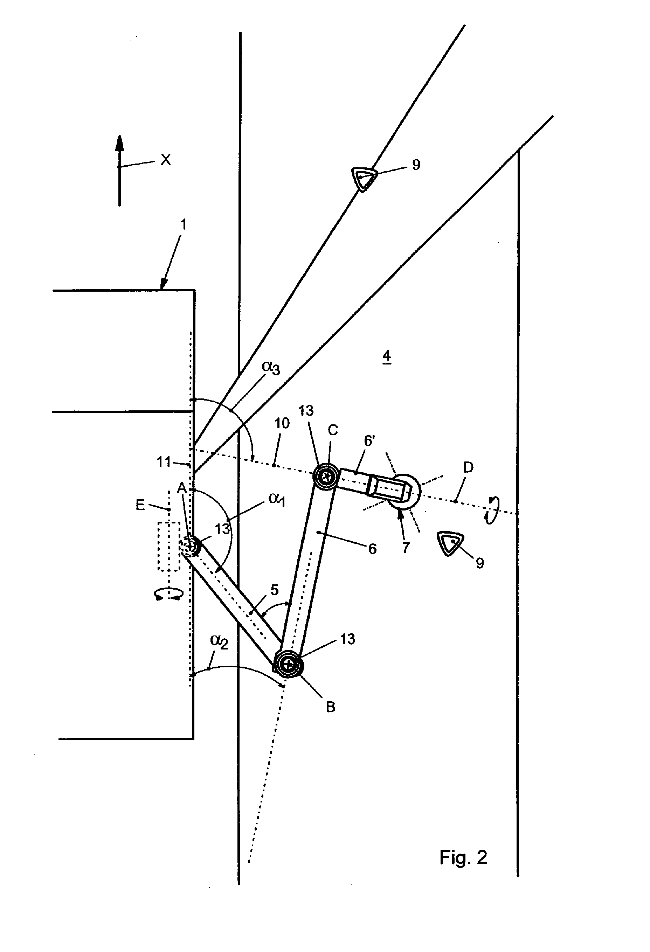

Im ersten Verfahrensschritt fährt die Bearbeitungseinrichtung 7 unter dem Vorhaltewinkel α₁, α₂, α₃ hinter das Hindernis 9, wie es in Figur 1 angedeutet ist. Beim anschliessenden Vorbeifahren am Hindernis 9, wie es im Ausführungsbeispiel gemäss Figur 2 aufgezeigt ist, ändert sich der Vorhaltewinkel α₁ und α₃, insbesondere des Tragarmes 5 und 6' bzw. vergrössert sich auf ca. 80° bis 110° zur Fahrzeugachse 11.

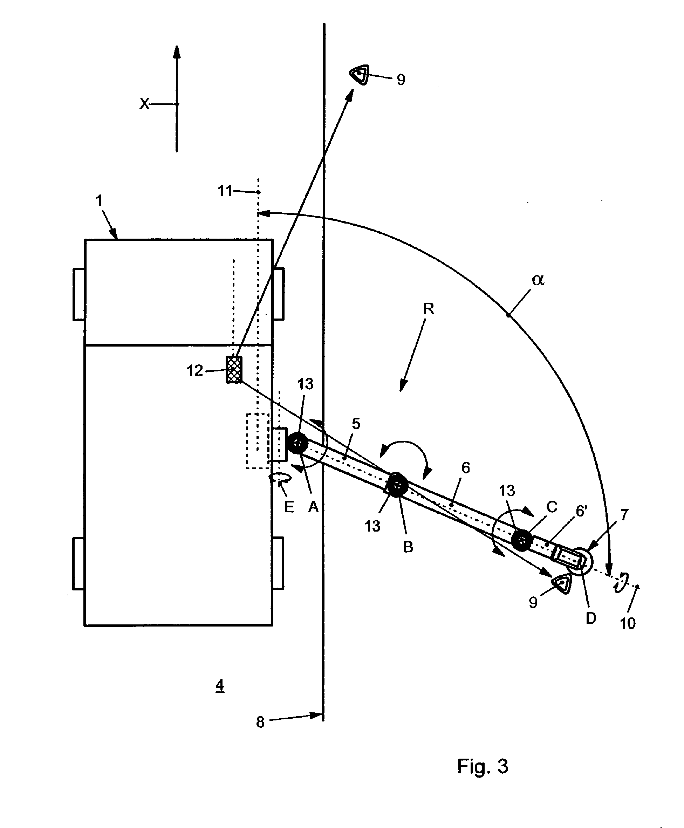

Der Tragarm 6 wird um die Achse B in einem spitzen Winkel α₂ gegen das Fahrzeug 1 eingefahren, wie durch Doppelpfeilrichtung dargestellt, so dass die Bearbeitungseinrichtung 7 hinter dem Hindernis 9 um dieses herum seitlich querab herumgefahren wird. Durch weiteres Fahren des Fahrzeuges 1 in Richtung X, wie es insbesondere in Figur 3 dargestellt ist, wird ein Bereich des Hindernisses 9 durch weiteres Verschwenken, des Tragarmes 6' bzw. durch Vergrössern des Vorhaltewinkels α₁ und α₃ kontinuierlich freigemäht. Dabei erfolgt in Abhängigkeit der Fahrgeschwindigkeit ein Zurückschwenken des Tragarmes 6' um das Achse C, um ein vollständiges Freimähen des Hindernisses 9 zu gewährleisten.

Die entsprechende Positionierung und Steuerung der Bearbeitungseinrichtung 7, über die Tragarme 5, 6, 6' die aktiv antreibbar um die Achsen A, B und C über Servoantriebe 13 verschwenkbar sind, erfolgt über eine Abstandsmesseinrichtung 12 die vorzugsweise dem Fahrzeug 1 zugeordnet ist. Die Abstandsmesseinrichtung 12 kann jedoch auch Bestandteil der Bearbeitungseinrichtung 7 oder sogar des Tragarmes 5 oder 6, 6' sein. Zudem kann die Bearbeitungseinrichtung 7 einen Sensor, insbesondere einen Bodenabstandssensor aufweisen, um diese, verschwenkbar um die Achse E gegenüber einem Untergrund 4 zu verfahren. Auf diese Weise lässt sich in Betrieb und während der Fahrt permanent oder in wählbaren Zeitabständen einen Abstand zum Untergrund 4 der Bearbeitungseinrichtung 7 einstellen. Dies soll ebenfalls im Rahmen der vorliegenden Erfindung liegen.

Über die Abstandsmesseinrichtung 12 wird der Abstand sowie der Ortsvektor zum Hindernis 9 ermittelt, der sich in Abhängigkeit der Fahrgeschwindigkeit und der Richtung des Fahrzeuges 1 ändert. Aufgrund der Abstandsmessungen zum Hindernis 9 sowie aufgrund der entsprechenden Geschwindigkeit des Fahrzeuges 1 lässt sich ein Vorhaltewinkel α₁, α₂, α₃ sowie eine Winkelgeschwindigkeit des Tragarmes 5 bzw. 6, 6' ermitteln und einstellen, um das Hindernis 9 vollständig freizumähen, wie es in den Figuren 1, 2 und 3 in unterschiedlichen Gebrauchslagen aufgezeigt ist.

Nach dem vollständigen Ummähen eines Hindernisses 9 wie es in Figur 3 dargestellt ist, verschwenkt der Tragarm 5, 6, 6' in seine ursprüngliche in Figur 1 dargestellte Lage zurück, um das nächste vorausfolgende Hindernis 9 erneut in oben beschriebener Weise zu bearbeiten.

In Figur 5 ist in der Rückansicht nochmals dargestellt, dass die Abstandsmesseinrichtung 12, welche zumindest aus einem Sensorelement bestehen kann, auch oberhalb des Fahrzeuges 1 angeordnet ist, um auch die Grösse bzw. eine Höhe des Hindernisses 9 zu ermitteln.

Ferner soll im Rahmen der vorliegenden Erfindung liegen, dass bspw. die Einrichtung 7 gegenüber dem Tragarm 6' um einen Winkel leicht gekröpft ausgebildet werden kann, wobei auch im Rahmen der vorliegenden Erfindung liegen soll, den Winkel zwischen Tragarm 6' und Bearbeitungseinrichtung 7 zu verändern oder fest einzustellen. Dies ist bspw. bei seitlich ansteigenden böschungartigen Randstreifen 8 von Vorteil.

Bei der vorliegenden Erfindung kann während der Fahrt und insbesondere auch bei sich ändernden Geschwindigkeiten und Abweichungen des Fahrzeuges 1 vom Hindernis 9 permanent Einfluss über eine hier nicht näher dargestellte und aufgezeigte Steuerung auf die Position der Bearbeitungseinrichtung 7 relativ zum Hindernis 9 genommen werden, um dieses vollständig freizumähen bzw. während des Vorbeifahrens des Fahrzeuges 1 zu ummähen. Dabei kann ein aufwändiges manuelles Nachmähen entfallen.

## Patentansprüche

1. Verfahren zum Betreiben einer einem Fahrzeug (1) zugeordneten Einrichtung (R), wobei ein dem Fahrzeug (1) zugeordneter Tragarm (5, 6) mit anschliessender Bearbeitungseinrichtung (7) lageveränderbar nahe eines Untergrundes (4) bewegt wird,
**dadurch gekennzeichnet,**
**dass** zum Bearbeiten eines Untergrundes, insbesondere zum Ummähen bzw. Freimähen eines Hindernisses (9) während der Fahrt des Fahrzeuges (1) die Bearbeitungseinrichtung (7) in einem ersten Verfahrensschritt hinter das Hindernis (9) einfährt, dann wieder zurückgefahren wird und anschliessend im Bereich zwischen Hindernis (9) und Fahrzeug (1) das Hindernis (9) während dem Vorbeifahren dieses umfährt und zumindest teilweise nach dem Vorbeifahren dieses nachbearbeitet.

2. Verfahren nach Anspruch 1, **dadurch gekennzeichnet, dass** die Bearbeitungseinrichtung (7), insbesondere der zumindest eine Tragarm (5, 6) und/oder die Bearbeitungseinrichtung (7) in einem Vorhaltewinkel (α₁, α₂, α₃) zum Fahrzeug (1) angestellt wird, um in einem ersten Verfahrensschritt durch Ausfahren des zumindest einen Tragarmes (5, 6, 6') hinter das Hindernis (9) ein und anschliessend wieder herauszufahren.

3. Verfahren nach Anspruch 1 oder 2, **dadurch gekennzeichnet, dass** nach einem Herausfahren der Bearbeitungseinrichtung (7) hinter dem Hindernis (9) unter Vergrösserung des Vorhaltewinkels (α₁, α₃) sowie Verkleinerung des Vorhaltewinkels (α₂) in Abhängigkeit der Fahrgeschwindigkeit des Fahrzeuges (1) die Bearbeitungseinrichtung (7) bzw. der zumindest eine Tragarm (5, 6, 6') das Hindernis (9) im Bereich zwischen Hindernis (9) und Fahrzeug (1) umfährt.

4. Verfahren nach wenigstens einem der Ansprüche 1 bis 3, **dadurch gekennzeichnet, dass** durch weiteres Vergrössern des Vorhaltewinkels (α₁) und (α₃) unter weiterer Verkleinerung des Vorhaltewinkels (α₂) und Bewegen des Tragarmes (5, 6, 6') entgegen der Fahrtrichtung ein vollständiges Ummähen bzw. Freimähen durch weiteres Ausfahren des zumindest einen Tragarmes um das Hindernis (9) herum erfolgt.

5. Verfahren nach wenigstens einem der Ansprüche 1 bis 4, **dadurch gekennzeichnet, dass** für ein erneutes Ummähen bzw. Freimähen eines nachfolgenden Hindernisses (9) der zumindest eine Tragarm (5, 6, 6') bzw. die Bearbeitungseinrichtung (7) in Fahrtrichtung horizontal über den Untergrund (4) auf den ursprünglichen Vorhaltewinkel (α₁, α₂, α₃) gefahren wird.

6. Verfahren nach wenigstens einem der Ansprüche 1 bis 5, **dadurch gekennzeichnet, dass** für ein Hintermähen bzw. Hintergreifen des Hindernisses (9) mittels der Bearbeitungseinrichtung (7) der Vorhaltewinkel (α₂) als spitzer Winkel zwischen einer Fahrzeugachse (11) in Fahrtrichtung gebildet wird.

7. Verfahren nach wenigstens einem der Ansprüche 1 bis 6, **dadurch gekennzeichnet, dass** über zumindest eine Abstandsmesseinrichtung (12), insbesondere Sensorelement die Ortslagekoordinaten des jeweiligen zu bearbeitenden Hindernisses (9) ermittelt werden und in Abhängigkeit von Geschwindigkeit des Fahrzeuges (1) die sich ändernden Ortskoordinaten des Hindernisses (9) zur Bestimmung der Bewegungen der Bearbeitungseinrichtung es (7) hinsichtlich Änderung des Vorhaltewinkels (α₁, α₂, α₃) sowie Verschwenken, sowie Ein- und Ausfahren des zumindest einen Tragarmes (5, 6, 6') permanent errechnet und gesteuert werden.

8. Verfahren nach wenigstens einem der Ansprüche 2 bis 7, **dadurch gekennzeichnet, dass** ein Vorhaltewinkel (α₃) zwischen Fahrzeugachse (11) und einer Tragarmachse (10) der Bearbeitungseinrichtung es (7) im ersten Verfahrensschritt beim Hintermähen bzw. Einfahren hinter das Hindernis in Fahrtrichtung als spitzer Winkel bis parallel zur Fahrzeugachse (11) von insbesondere, von etwa 15° Grad bis 60°, vorzugsweise 30° gewählt wird.

9. Verfahren nach Anspruch 7 oder 8, **dadurch gekennzeichnet, dass** als Abstandsmesseinrichtung (12) ein ortsfester dem Fahrzeug (1) zugeordneter Sensor verwendet wird, um den Ort, die Ortskoordinaten, die Entfernung, die sich ändernden Ortskoordinaten betreffend Richtung und Entfernung zwischen dem fahrenden Fahrzeug (1) und dem Hindernis (9) zu ermittelten.

10. Verfahren nach wenigstens einem der Ansprüche 1 bis 9, **dadurch gekennzeichnet, dass** der zumindest eine Tragarm (5, 6, 6') um einen Winkel (β) gegenüber dem Fahrzeug (1), insbesondere einer dem Fahrzeug zugeordneten Halteeinrichtung (3) für den zumindest einen Tragarm (5, 6, 6') während der Fahrt, untergrundsabhängig veränderbar ist.

11. Verfahren nach wenigstens einem der Ansprüche 1 bis 10, **dadurch gekennzeichnet, dass** die Bearbeitungseinrichtung (7) um eine Achse (D) aktiv angetrieben und ansteuerbar oder manuell verstellbar verschwenkt wird.

12. Einrichtung, zugeordnet an einem Fahrzeug (1) zum Bearbeiten eines Untergrundes (4), insbesondere zum Mähen von Untergründen (4) mit zumindest einem Tragarm (5, 6, 6') mit daran anschliessender Bearbeitungseinrichtung (7), **dadurch gekennzeichnet, dass** der Tragarm (5, 6, 6') einoder mehrteilig ausgebildet und um eine Achse (A, B, C) um einen Vorhaltewinkel (α₁, α₂, α₃) bei Stillstand oder im Fahrbetrieb gegenüber dem Fahrzeug (1) verschwenkbar angeordnet ist.

13. Einrichtung, zugeordnet an einem Fahrzeug (1) zum Bearbeiten eines Untergrundes (4), insbesondere zum Mähen von Untergründen (4) mit zumindest einem Tragarm (5, 6, 6') mit daran anschliessender Bearbeitungseinrichtung (7), **dadurch gekennzeichnet, dass** der zumindest eine Tragarm (5 oder 6) mit anschliessender Bearbeitungseinrichtung (7) um eine Achse (E) um einen Winkel (β) bei Stillstand oder in Fahrt des Fahrzeuges (1) verschwenkbar ist.

14. Einrichtung, zugeordnet an einem Fahrzeug (1) zum Bearbeiten eines Untergrundes (4), insbesondere zum Mähen von Untergründen (4) mit zumindest einem Tragarm (5, 6, 6') mit daran anschliessender Bearbeitungseinrichtung (7),
**dadurch gekennzeichnet, dass** der Bearbeitungseinrichtung (7), dem zumindest einen Tragarm (5, 6, 6') und/oder dem Fahrzeug (1) eine Abstandsmesseinrichtung (12), insbesondere Sensorelement zugeordnet ist, welches auch während der Fahrt des Fahrzeuges (1) die sich ändernden Abstandskoordinaten in Bezug auf Distanz und Richtung bzw. Winkel zwischen Bearbeitungseinrichtung (7) und Hindernis (9) ermittelt.

15. Einrichtung nach wenigstens einem der Ansprüche 12 bis 14, **dadurch gekennzeichnet, dass** der Tragarm (5) direkt am Fahrzeug (1) oder über eine Halteeinrichtung (3) verschwenkbar um eine Achse (A) und/oder klappbar um eine Achse (E) angeordnet ist.

16. Einrichtung nach wenigstens einem der Ansprüche 12 bis 15, **dadurch gekennzeichnet, dass** über Servoantriebe (13) die Tragarme (5, 6, 6') gegeneinander aktiv verschwenkbar verbunden sind, wobei diese um die Achsen (A), (B) und (C) zueinander verschwenkbar sind.

17. Einrichtung nach wenigstens einem der Ansprüche 12 bis 16, **dadurch gekennzeichnet, dass** die beiden Tragarme (5, 6) um eine Achse (B) gelenkartig zueinander aktiv über einen Servoantrieb (13) verschwenkbar sind, wobei die Achse (C) in etwa parallel zur Achse (A) und in etwa lotrecht zum Fahrzeug (1) ausgerichtet sind.

18. Einrichtung nach wenigstens einem der Ansprüche 12 bis 17, **dadurch gekennzeichnet, dass** jedem Gelenk und/oder Servoantrieb (13) des Tragarmes (5, 6, 6'), der um die Achsen (A), (B) und/oder (C) verschwenkbar angeordnet ist, ein Winkelmesssystem und/oder Wegmesssystem zugeordnet ist, welches über den Weg bzw. den jeweiligen Winkel bzw. der Winkel der Tragarme (5, 6, 6') zueinander eine Ortskoordinate der Bearbeitungseinrichtung (7) bestimmt und über entsprechende Servoantriebe (13) durch Winkelverstellung der jeweiligen Tragarme (5, 6, 6') und Vorhaltewinkel (α₁, α₂, α₃), Winkel (β) der Tragarme (5, 6, 6') und damit der Bearbeitungseinrichtung (7) relativ zum Fahrzeug (1) veränderbar ist.

19. Einrichtung nach wenigstens einem der Ansprüche 12 bis 18, **dadurch gekennzeichnet, dass** beim Vorbeifahren des Fahrzeuges (1) am Hindernis (9) querab und beim Zurückbewegen durch Knicken oder durch teleskopartiges Ineinanderbewegen der Tragarme (5, 6, 6') die Bearbeitungseinrichtung (7) aus dem hinteren Bereich des Hindernisses (9) herausfahrbar ist.

20. Einrichtung nach wenigstens einem Ansprüche 12 bis 19, **dadurch gekennzeichnet, dass** nach dem Vorbeifahren des Fahrzeuges (1) querab zum Hindernis (9) der Tragarm (5, 6, 6') hinter das Hindernis (9) einfährt, wobei ein Vorhaltewinkel (α₁) von etwa 100° bis 150°, vorzugsweise 110° gewählt ist.

21. Einrichtung nach wenigstens einem der Ansprüche 12 bis 20, **dadurch gekennzeichnet, dass** die Bearbeitungseinrichtung (7) um eine Achse (D) des Tragarmes (6') verschwenkbar ist.

22. Einrichtung nach wenigstens einem der Ansprüche 15 bis 21, **dadurch gekennzeichnet, dass** der Tragarm (5) um die Achse (E) gegen das Fahrzeug (1) klappbar ist, wobei die Achse (E) in etwa parallel zur Fahrzeugachse (11). ausgerichtet ist.
